# EUROPÄISCHE PATENTSCHRIFT

(11) **EP 1 152 507 B1**
(45) Veröffentlichungstag und Bekanntmachung des Hinweises auf die Patenterteilung: **10.11.2004**
(21) Anmeldenummer: 01109662.5
(22) Anmeldetag: 19.04.2001
(51) Int. Cl.: H02B 1/01

(54) **Rahmengestell**
Frame
Bâti

(30) Priorität: 04.05.2000 DE 10021719
(43) Veröffentlichungstag der Anmeldung: 07.11.2001
(73) Patentinhaber: Knürr AG, 94424 Arnstorf (DE)
(72) Erfinder: Knab, Josef, 94439 Rossbach (DE); Prinz, Alexander, 84389 Postmünster (DE); Schneiderbauer, Siegfried, 94439 Rossbach (DE); Neuwardt, Klaus, 94436 Simbach (DE)
(74) Vertreter: Heim, Hans-Karl, Dipl.-Ing.

(56) Entgegenhaltungen:
- EP-A- 0 977 330
- WO-A-99/02071

## Beschreibung

Die Erfindung betrifft ein Rahmengestell, insbesondere für Geräteschränke, gemäß dem Oberbegriff des Anspruchs 1.

Die Erfindung ist grundsätzlich für Schränke, Gehäuse und Behälter geeignet, bevorzugt jedoch für Schränke, welche zur Aufnahme von elektrischen und elektronischen Geräten und Bauteilen dienen, beispielsweise für LAN-Schränke, Rechner- und Serverschränke, vorgesehen. Die Erfindung kann auch für Arbeitstische und insbesondere Werkstatttische Verwendung finden, bei denen drei Holme oder Profile rechtwinklig zueinander zu einer Ecke verbunden werden.

Aus dem DE 93 02 769 U1 ist ein Geräteschrank bekannt, welcher Führungselemente zum Aufstecken sowie Durchgangsbohrungen zum Befestigen des jeweiligen Vertikalholms, Horizontalholms und Tiefenholms mit Hilfe von Befestigungselementen aufweist. Die Führungselemente sind an stirnseitigen Anschlussflächen des Eckverbinders ausgebildet und wirken mit einer komplementären stirnseitigen Öffnung der Holme zusammen. Die Befestigung der aufgesteckten Holme wird anschließend mit drei in Durchgangsbohrungen des Eckverbinders geführten Befestigungselementen vorgenommen, welche jeweils in entsprechend auszubildende Befestigungsöffnungen der Holme eingeführt und gesichert werden.

Ein in der DE 195 29 270 C1 beschriebenes Rahmengestell für Geräteschränke weist ebenfalls Eckverbinder mit drei Ansätzen auf. Die Ansätze haben den gleichen quadratischen oder kreisförmigen Querschnitt wie die aufsteckbaren Profile. Jeder Ansatz weist zur dauerhaften, ohne Zerstörung nicht mehr lösbaren elektrischen Verbindung und mechanischen Befestigung eines aufgeschobenen Hohlprofils wenigstens eine Vertiefung auf, in welche Material des Hohlprofils, beispielsweise einer ausgestanzten Zunge, eingedrückt wird.

Eine Ausgestaltung des Eckverbinders sieht vor, dass zwei Ansätze angeformt und der dritte Ansatz lösbar befestigt, beispielsweise angeschraubt werden kann.

Aus der DE 691 01 727 T2 ist ein Rahmengestell mit Quer-, Tiefen- und Vertikalprofilen bekannt, welche über Eckverbinder mit drei Steckansätzen verbunden werden. Die Profile und Steckansätze, welche einen dreieckigen Querschnitt aufweisen, werden lösbar durch Festklemmen und nachfolgendes Verschrauben verbunden. Zum Festklemmen der auf die Steckansätze aufgeschobenen Profile sind die Steckansätze mit einem Schlitz versehen, welcher durch eine Schraube entsprechend verbreitert werden kann.

Die bekannten Rahmengestelle mit einem rechteckigen oder quadratischen Querschnitt der Profile sind relativ materialaufwendig und weisen auch ein entsprechendes Gewicht auf. Die lösbare Befestigung der auf die Eckverbinderansätze aufschiebbaren Dreiecksprofile ist mit einem hohen Aufwand für Konstruktion, Fertigung und Montage verbunden. Ein Verprägen oder Crimpen der aufgesteckten Profile erfordert ein zusätzliches Werkzeug, was sich inbesondere bei einer Montage vor Ort nachteilig auswirken kann.

Aus der EP-A1-0 977 330 ist ein Rahmengestell für Geräteschränke mit Quer-, Tiefen- und Vertikalprofilen bekannt, welche aus L-förmigen Hohlprofilen gebildet sind und über Eckverbinder verbunden sind.

Der Erfindung liegt die **Aufgabe** zugrunde, ein stabiles Rahmengestell zu schaffen, welches bei einer einfachen konstruktiven Ausbildung und relativ geringem Gewicht eine kostengünstige Fertigung und eine außerordentlich effiziente Montage ermöglicht.

Erfindungsgemäß wird die Aufgabe durch die Merkmale des Anspruchs 1 gelöst. Zweckmäßige und vorteilhafte Ausgestaltungen sind Merkmale der Unteransprüche und in der Figurenbeschreibung beschrieben.

Ein Grundgedanke der Erfindung besteht darin, von den quadratischen und rechteckigen Hohlprofilen zum Aufstecken auf Eckverbinderansätze abzugehen und Dreiecksprofile einzusetzen. Durch eine geeignete Anordnung von zwei Seitenflächen des Dreiecksprofils, welche vorzugsweise einen rechten Winkel bilden, sind die erforderlichen Befestigungsmöglichkeiten für Einbauschienen etc. und für eine Anbindung der Verkleidungsteile eines Geräteschrankes gewährleistet.

Ein weiterer Grundgedanke der Erfindung besteht darin, Eckverbinder mit zwei angeformten Steckansätzen zur Ausbildung eines unteren und oberen Rahmens zu verwenden und die Anbindung der Vertikalprofile über Befestigungseinsätze, welche in Endbereichen der Vertikalprofile angeordnet sind, zu erreichen.

Erfindungsgemäß sind wenigstens die Querprofile und Tiefenprofile eines oberen und unteren Rahmens aus einem dreieckigen Hohlprofil, beispielsweise durch Ablängen, ausgebildet. Die Quer- und Tiefenprofile werden auf komplementäre Steckansätze eines Eckverbinders, welche an einem Eckteil angeformt sind, mit geringem Spiel aufgesteckt und fixiert. Die Vertikalprofile werden über endseitig angeordnete Befestigungseinsätze mit den Eckverbindern im Bereich der Eckteile verbunden.

Es ist vorteilhaft, dass die Vertikalprofile mit ihren Befestigungseinsätzen lösbar an dem oberen und unteren Rahmen befestigt werden können, so dass im Falle einer Umrüstung der obere und untere Rahmen und auch die Vertikalprofile wiederverwendet werden können.

Für eine kostengünstige Fertigung und Montage ist es zweckmäßig, wenn die Vertikalprofile aus dem gleichen dreieckigen Hohlprofil wie die Quer- und Tiefenprofile bestehen. Dies wirkt sich auch auf die Lagerhaltung günstig aus.

Als Befestigungseinsätze können Gewindeklötze in die Vertikalprofile endseitig aufgenommen und befestigt, beispielsweise verpresst, verprägt oder verschraubt, werden. Die Befestigungseinsätze weisen jeweils einen Gewindekanal für eine Befestigungsschraube auf, welche durch die Eckteile geführt und in den Befestigungseinsätzen der Vertikalprofile festgeschraubt wird.

Die Eckteile und Steckeinsätze sind zweckmäßigerweise derart ausgebildet, dass die zu verbindenden Quer-, und Tiefenprofile mit Form- und Reibschluss befestigt sind und mit einem Klemmbereich am Endteil anliegen. Die Vertikalprofile mit den endseitigen Befestigungseinsätzen liegen jeweils mit ihren Stirnseiten an. Auf diese Weise wird eine Eckverbindung mit sicher befestigten Profilen geschaffen und eine hohe Stabilität des Rahmengestells gewährleistet.

Es kann zweckmäßig sein, die Quer- und Tiefenprofile unlösbar mit den Eckverbindern zu befestigen. Dies kann grundsätzlich durch das bekannte Verprägen oder Crimpen erfolgen.

Besonders vorteilhaft können die Quer- und Tiefenprofile an den Steckansätzen befestigt werden, wenn die Steckansätze Eingriffselemente und die Quer- und Tiefenprofile komplementäre Öffnungen zur Aufnahme der Eingriffselemente in Befestigungsstellung aufweisen. Die Eingriffselemente können für eine werkzeuglose Montage z.B. als keilähnliche Nasen ausgebildet sein, welche ein unbeabsichtigtes Lösen der Profile verhindern.

Eine weitere Befestigungsmöglichkeit kann darin bestehen, die Steckansätze mit wenigstens einer Bohrung, welche grundsätzlich horizontal oder vertikal verlaufen kann, zu versehen und die aufgeschobenen Quer- und Tiefenprofile mit Hilfe eines in die Bohrung einschlagbaren Schlagbolzens zu befestigen. In diesem Fall müssen keine Öffnungen oder Ausnehmungen in den aufgesteckten Quer- und Tiefenprofilen ausgebildet werden. Der Schlagbolzen kann manuell oder aber auch mit einem entsprechenden Gerät eingeführt werden.

Eine gewindezugähnliche Befestigungsmöglichkeit sieht eine Durchgangsbohrung in den Quer- und Tiefenprofilen und eine Bohrung mit größerem Durchmesser in den Steckansätzen vor. Das überstehende Material der Quer- und Tiefenprofile kann dann in die Durchgangsbohrung eingepresst werden, so dass ebenfalls eine sichere Befestigung erreicht wird.

Eine lösbare oder unlösbare Befestigung der Quer- und Tiefenprofile kann mit Hilfe eines Klebemittels erreicht werden. Es kann sich dann als zweckmäßig erweisen, Rillen, beispielsweise Längsrillen oder auch Querrrillen an den Steckansätzen auszubilden, welche der Aufnahme des Klebstoffs dienen.

Die Erfindung wird nachstehend anhand einer Zeichnung weiter erläutert; in dieser zeigen in einer stark schematisierten Darstellung:
- Fig. 1: eine perspektivische Ansicht eines Eckverbinders für das erfindungsgemäße Rahmengestell;
- Fig. 2: einen Eckbereich eines erfindungsgemäßen Rahmengestells;
- Fig. 3: eine perspektivische Rückansicht eines Eckverbinders mit teilweise aufgeschobenem Querprofil und befestigtem Vertikalprofil;
- Fig. 4: eine Draufsicht auf einen Eckverbinder mit aufgeschobenem und befestigten Querprofil;
- Fig. 5: einen Eckverbinder mit aufgeschobenem Querprofil und einer weiteren Befestigungsvariante;
- Fig. 6: einen Eckverbinder mit aufgeschobenem Querprofil und einer weiteren Befestigungsvariante und
- Fig. 7: einen Eckverbinder für eine Klebebefestigung der Quer- und Tiefenprofile.

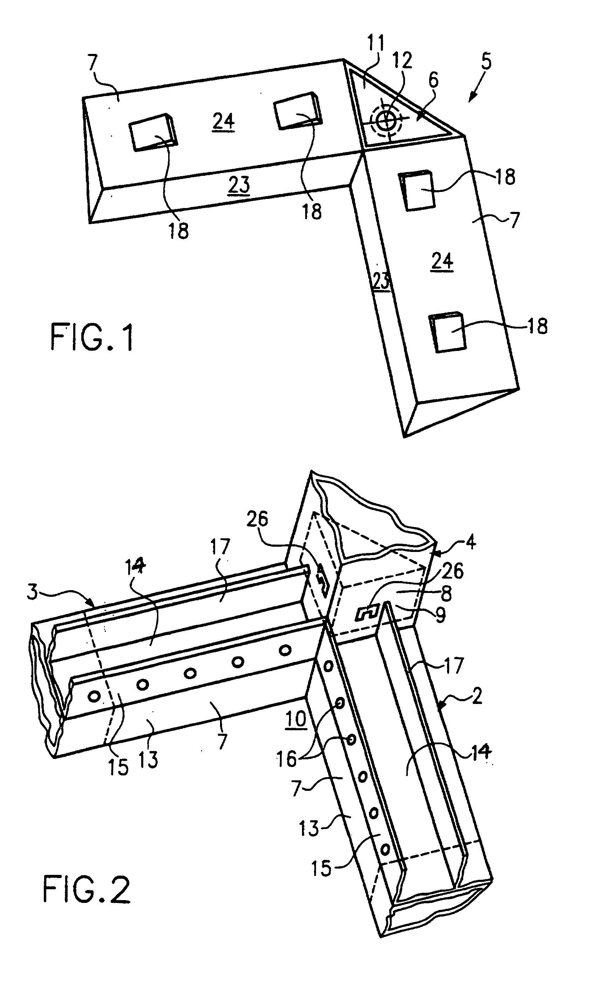

Figur 1 zeigt einen Eckverbinder 5, welcher aus einem Eckteil 6 und zwei rechtwinklig zueinander und in einer Ebene angeordneten Steckansätzen 7 besteht. Im vorliegenden Beispiel dient der Eckverbinder 5 zur Ausbildung einer linken rückseitigen Gestellecke gemäß Figur 2, bei welcher ein Querprofil 2, ein Tiefenprofil 3 und ein Vertikalprofil 4 als x-, y-, z-Koordinaten angeordnet werden.

Die zwei Steckansätze 7 des Eckverbinders 5 weisen einen dreieckigen Querschnitt mit Eingriffselementen 18 zur sicheren Befestigung des aufsteckbaren Querprofils 2 und Tiefenprofils 3 auf. Querprofil 2 und Tiefenprofil 3 sind aus einem dreieckigen Hohlprofil, welches komplementär zu den Steckansätzen 7 ausgebildet ist, abgelängt und können mit geringem Spiel auf die Steckansätze 7 aufgeschoben werden.

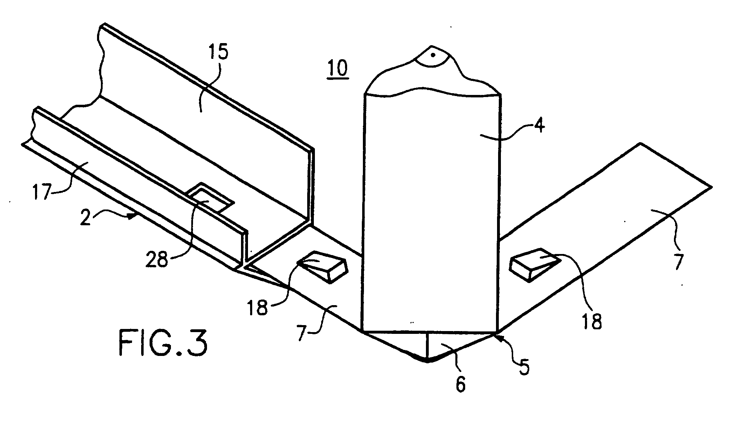

Eine sichere und grundsätzlich unlösbare Befestigung der aufgesteckten Quer- und Tiefenprofile 2, 3 wird durch Ausnehmungen 28, insbesondere Öffnungen, erreicht, welche komplementär zu den Eingriffselementen 18 der Steckansätze 7 in den Quer- und Tiefenprofilen 2, 3 ausgebildet sind. Aus Gründen der Übersichtlichkeit wurden Eingriffselemente 18 in Fig. 1 nur an horizontal ausgerichteten Seitenflächen 24 der Steckansätze 7 gezeigt, jedoch in Fig. 2 ebenso wie die Ausnehmungen 28 weggelassen. Die rückseitige Ansicht eines Eckverbinders 5 mit daran befestigtem Vertikalprofil 4, einem teilweise aufgeschobenen Querprofil 2, eine Ausnehmung 28 in dem Querprofil 2 sowie die komplementär ausgebildeten Eingriffselemente 18 an den Steckansätzen 7 zeigt Fig. 3.

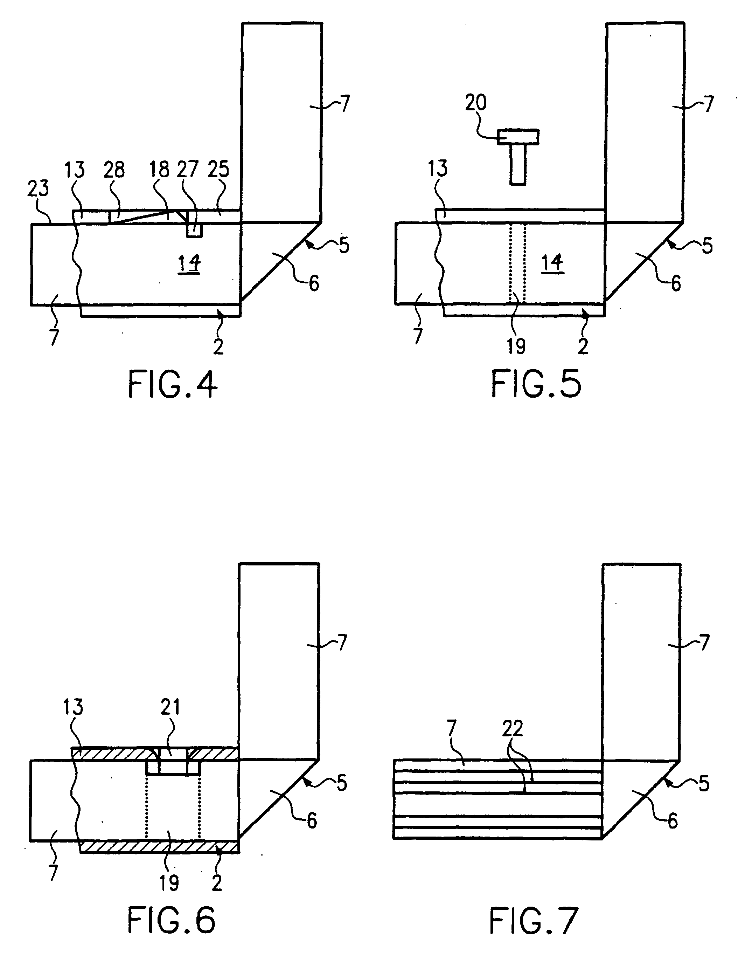

Aus Figur 4 geht hervor, dass die Eingriffselemente 18, welche als keilähnliche Nasen ausgebildet sind, auch an den senkrechten Seitenflächen 23 der Steckansätze vorgesehen sein können. Die keilähnliche Ausbildung der Eingriffselemente 18 ermöglicht ein gleitendes Aufstecken und Verrasten der Profile 2, 3, unter Ausbildung eines Klemmbereiches 25 mit Form- und Reibschluss. Es ist sinnvoll, wenn ein Raum 27 zur Aufnahme der beim Aufstecken anfallenden Späne ausgebildet ist.

Die Eckverbinder 5 weisen ein Eckteil 6 auf, welches komplementär zu den dreieckigen Steckansätzen 7 ausgebildet ist. Eine Anlagefläche 11, welche bei einem zusammengesteckten oberen und unteren Rahmen (nicht dargestellt) horizontal angeordnet ist, ist als rechtwinkliges Dreieck ausgebildet und dient zur stirnseitigen Anlage eines Vertikalprofils 4 (siehe Fig. 1).

Das Vertikalprofil 4 ist wie die Querprofile 2 und Tiefenprofile 3 zweckmäßigerweise aus dem gleichen dreieckigen Hohlprofil hergestellt und wird an die Eckteile 6 des unteren und oberen Rahmens durch Verschrauben und somit lösbar befestigt. Zu diesem Zweck kann ein Vertikalprofil 4 jeweils endseitig mit einem Gewindegang (nicht dargestellt) versehen sein, in den eine in einer Bohrung 12 der Eckteiles 6 geführte, zentrale Befestigungsschraube (nicht dargestellt) eingeschraubt werden kann.

Figur 2 zeigt eine bevorzugte lösbare Befestigung der Vertikalprofile 4 an den Eckteilen 6 der Eckverbinder 5 des unteren und oberen Rahmens. Die Vertikalprofile 4 sind endseitig mit Befestigungseinsätzen 8, beispielsweise Gewindeklötzen 9, versehen und die Gewindegänge (nicht dargestellt) in diesen Befestigungseinsätzen 8 ausgebildet. Die Befestigung des in Figur 2 gezeigten Gewindeklotzes 9 erfolgt durch Verprägungen 26. Grundsätzlich können die Gewindeklötze 9 auch verpresst oder verschraubt werden. Die einzige Befestigungsschraube (nicht dargestellt) wird dann von außen durch das Eckteil 6 geführt und in dem Gewindeklotz 9 gesichert, so dass eine Anlage und sichere Befestigung des Vertikalprofils 4 mit Gewindeklotz 9 auf/an der Anlagefläche 11 des Eckteils 6 gewährleistet ist.

Figur 2 zeigt eine Ausbildungsvariante der Quer-, Tiefenund Vertikalprofile 2, 3, 4, bei denen die Querprofile 2 und Tiefenprofile 3 innenseitig mit einem Befestigungssteg 15 und parallel zu diesem in einem außenseitigen Bereich mit einem Haltesteg 17 versehen sind. Figur 2 verdeutlicht, dass der Befestigungssteg 15 und der Haltesteg 17 an einem U-förmigen Profil ausgebildet sein können. Der Befestigungssteg 15, welcher mit einer senkrecht ausgerichteten Seitenfläche 13 des Querprofils 2 bzw. Vertikalprofils 4 fluchtet, ist mit Befestigungsöffnungen 16 versehen, welche insbesondere rasterartig ausgebildet sein können. Der parallele Haltesteg 17 ist zur Anbindung der Verkleidungsteile eines Geräteschrankes, beispielsweise der Seitenwände, einer Rückwand, einer Fronttür und/oder eines Deck- und Bodenblechs (nicht dargestellt), vorgesehen und mit Abstand zur Außenkante angeordnet.

Die perspektivische Rückseitenansicht des Eckverbinders 5 nach Fig. 3 mit den zwei Steckansätzen 7 und einem teilweise aufgeschobenen Querprofil 2 entspricht den Figuren 1 und 2. Sowohl die Querprofile 2 bzw. Tiefenprofile 3 als auch die Vertikalprofile 4 sowie in gleicher Weise die Steckansätze 7 sind im Querschnitt als ein rechtwinkliges Dreieck ausgebildet, dessen den rechten Winkel bildenden Seitenflächen 12, 13 bzw. 23, 24 zu einem Innenraum 10 (siehe auch Figur 2) gerichtet sind.

Die Figuren 4 bis 7 zeigen alternative Befestigungsmöglichkeiten für die auf die zwei Steckansätze 7 eines Eckverbinders 5 aufsteckbaren dreieckigen Hohlprofile, wobei jeweils nur ein Querprofil 2 mit einem Endbereich dargestellt ist.

Die Befestigung gemäß Fig. 4 entspricht den bereits beschriebenen Befestigungen nach Fig. 1 und 3. Gleiche Merkmale sind mit identischen Bezugszeichen versehen. Bei der in Fig. 5 gezeigten Befestigung ist wenigstens eine horizontal ausgerichtete Bohrung 19 in einem Steckansatz 7 eingebracht. Das aufgeschobene Querprofil 2 bzw. Tiefenprofil 4 wird mit Hilfe eines in diese Bohrung 12 einschlagbaren Schlagbolzen 20 sicher befestigt.

Die alternative Befestigung nach Fig. 6 sieht wenigstens eine horizontale Bohrung 19 in einem Steckansatz 7 und eine mit dieser fluchtende Durchgangsbohrung 21 in dem aufgeschobenen Profil 2 vor, wobei die Durchgangsbohrung 21 einen kleineren Durchmesser als die Bohrung 19 aufweist. Eine Befestigung erfolgt durch Einpressen des überstehenden Materials des aufgeschobenen Profils 2 in die Bohrung 19, so dass ein einer Prägung vergleichbarer Gewindedurchzug erreicht wird.

In Fig. 7 ist ein Eckverbinder 5 mit zwei Steckansätzen 7 gezeigt, wovon ein Steckansatz 7 beispielhaft mit Rillen 22 versehen ist. Die Rillen können als Längsrillen und/oder als Querrillen ausgebildet sein. Der zweite Steckansatz 7 kann in gleicher Weise mit derartigen Längs- oder Querrillen versehen sein, welche der Aufnahme eines Klebemittels zum Verkleben der aufgesteckten Querprofile 2 bzw. Tiefenprofile 3 dienen.

Alle gezeigten Befestigungsvarianten der aufgesteckten Querprofile 2 und Tiefenprofile 3 sichern einen Formschluss und Reibschluss durch einen Klemmbereich unmittelbar angrenzend an das Eckteil 6 der Eckverbindung 5, so dass eine sichere Befestigung der Querprofile 2 und Tiefenprofile 3 und zusammen mit dem anschraubbaren Vertikalprofil 4 ein stabiles Rahmengestell geschaffen werden kann.

## Patentansprüche

1. Rahmengestell, insbesondere für Geräteschränke, mit Querprofilen (2) und Tiefenprofilen (3), welche über Eckverbinder (5) zu einem oberen und einem unteren Rahmen verbunden sind, und mit Vertikalprofilen (4), welche den oberen und unteren Rahmen im Bereich der Eckverbinder (5) verbinden,
**dadurch gekennzeichnet,**
**dass** wenigstens die Querprofile (2) und Tiefenprofile (3) des oberen und unteren Rahmens aus einem dreieckigen Hohlprofil gebildet sind,
**dass** jeder Eckverbinder (5) ein Eckteil (6) mit zwei Steckansätzen (7) zum Aufstecken eines dreieckigen Querprofils (2) und eines Tiefenprofils (3) aufweist und
**dass** die Vertikalprofile (4) endseitig mit Befestigungseinsätzen (8) zur Befestigung an den Eckteilen (6) der Eckverbinder (5) versehen sind.

2. Rahmengestell nach Anspruch 1,
**dadurch gekennzeichnet,**
**dass** die Vertikalprofile (4) aus dem gleichen dreieckigen Hohlprofil wie die Querprofile (2) und Tiefenprofile (3) des oberen und unteren Rahmens gebildet sind.

3. Rahmengestell nach Anspruch 1 oder 2,
**dadurch gekennzeichnet,**
**dass** die Vertikalprofile (4) als Befestigungseinsätze (8) Gewindeklötze (9) aufweisen und jeweils mit Hilfe einer Befestigungsschraube, welche durch das Eckteil (6) geführt ist, fixierbar sind.

4. Rahmengestell nach Anspruch 3
**dadurch gekennzeichnet,**
**dass** die Gewindeklötze (9) in den Vertikalprofilen (4) durch Verpressen, Verprägen oder Verschrauben befestigt sind und jeweils einen Gewindekanal für die Befestigungsschraube aufweisen.

5. Rahmengestell nach einem der vorhergehenden Ansprüche, **dadurch gekennzeichnet,**
**dass** die Eckteile (6) der Eckverbinder (5) eine dreieckige Anlagefläche (11) zur stirnseitigen Anlage des Vertikalprofils (4) mit Befestigungseinsatz (8) aufweisen.

6. Rahmengestell nach Anspruch 5,
**dadurch gekennzeichnet,**
**dass** die Eckteile (6) der Eckverbinder (5) komplementär zu den angeformten dreieckigen Steckansätzen (7) ausgebildet sind und eine Bohrung (12) zur Aufnahme und Führung der Befestigungsschraube aufweisen.

7. Rahmengestell nach einem der vorhergehenden Ansprüche,
**dadurch gekennzeichnet,**
**dass** die Querprofile (2), Tiefenprofile (3) und Vertikalprofile (4) im Querschnitt als ein rechtwinkliges Dreieck ausgebildet und derart angeordnet sind, dass die den rechten Winkel einschließenden Seitenflächen (13, 14) zu einem vom Rahmengestell gebildeten Innenraum (10) gerichtet sind.

8. Rahmengestell nach einem der vorhergehenden Ansprüche,
**dadurch gekennzeichnet,**
**dass** die aus dem dreieckigen Hohlprofil gebildeten Querprofile (2) und Tiefenprofile (3) mit einem Befestigungssteg (15) versehen sind.

9. Rahmengestell nach Anspruch 8,
**dadurch gekennzeichnet,**
**dass** der Befestigungssteg (15) innenseitig und vertikal ausgerichtet an dem dreieckigen Hohlprofil der Querprofile (2) und Tiefenprofile (3) angeordnet und mit einem Lochraster (16) versehen ist.

10. Rahmengestell nach einem der vorhergehenden Ansprüche,
**dadurch gekennzeichnet,**
**dass** das dreieckigen Hohlprofil der Querprofile (2) und Tiefenprofile (3) mit einem Haltesteg (17) versehen ist.

11. Rahmengestell nach Anspruch 10,
**dadurch gekennzeichnet,**
**dass** der Haltesteg (17) außenseitig und senkrecht angeordnet ist und parallel zum Befestigungssteg (15) verläuft.

12. Rahmengestell nach einem der vorhergehenden Ansprüche,
**dadurch gekennzeichnet,**
**dass** die auf die Steckansätze (7) aufgeschobenen Querprofile (2) und Tiefenprofile (3) an den Eckverbindern (5) lösbar oder unlösbar befestigt sind.

13. Rahmengestell nach Anspruch 12,
**dadurch gekennzeichnet,**
**dass** die Querprofile (2) und Tiefenprofile (3) durch Verprägen oder Crimpen an den Steckansätzen (7) der Eckverbinder (5) fixierbar sind.

14. Rahmengestell nach Anspruch 12,
**dadurch gekennzeichnet,**
**dass** die Steckansätze (7) Eingriffselemente (18) und die Querprofile (2) und Tiefenprofile (3) Ausnehmungen (28) zur Aufnahme der Eingriffselemente (18) in Befestigungsstellung aufweisen.

15. Rahmengestell nach Anspruch 12,
**dadurch gekennzeichnet,**
**dass** die Steckansätze (7) mit wenigstens einer Bohrung (19) versehen sind und die aufgeschobenen Querprofile (2) und Tiefenprofile (4) mit Hilfe eines in die Bohrung (12) einschlagbaren Schlagbolzens (20) fixierbar sind.

16. Rahmengestell nach Anspruch 12,
**dadurch gekennzeichnet,**
**dass** die Steckansätze (7) mit einer Bohrung (19) und die Querprofile (2) und Tiefenprofile (3) mit einer in aufgeschobener Befestigungsstellung fluchtenden Durchgangsbohrung (21) versehen sind, dass die Durchgangsbohrung (21) einen geringeren Durchmesser als die Bohrung (19) aufweist und das überstehende Material im Bereich der Durchgangsbohrung (21) einpressbar ist.

17. Rahmengestell nach Anspruch 12,
**dadurch gekennzeichnet,**
**dass** die Querprofile (2) und Tiefenprofile (3) durch Kleben an den Steckansätzen (7) fixierbar sind und Rillen (22) zur Aufnahme eines Klebstoffes an den Steckansätzen (7) ausgebildet sind.

18. Rahmengestell nach einem der vorhergehenden Ansprüche,
**dadurch gekennzeichnet,**
**dass** die Eckverbinder (5) Aluminiumgussteile und die als dreieckige Hohlprofile ausgebildeten Querprofile (2), Tiefenprofile (3) und Vertikalprofile (4) aus Aluminiumstrangpressprofilen oder Stahl-Rollierprofilen gebildet sind.

## Claims

1. Basic rack, particularly for equipment cabinets, with transverse profiles (2) and depth profiles (3), which are connected by means of corner connectors (5) to an upper and a lower frame, and with vertical profiles (4) which connect the upper and lower frame in the area of the corner connectors (5),
**characterized in that**
at least the transverse profiles (2) and depth profiles (3) of the upper and lower frame are formed from a triangular hollow profile,
that each corner connector (5) has a corner part (6) with two fixing extensions (7) for mounting a triangular transverse profile (2) and a depth profile (3) and
that the vertical profiles (4) are provided at each end with a fastening insert (8) for fastening to the corner parts (6) of the corner connectors (5).

2. Basic rack according to claim 1,
**characterized in that**
the vertical profiles (4) are formed from the same triangular hollow profile as the transverse profiles (2) and depth profiles (3) of the upper and lower frame.

3. Basic rack according to claim 1 or 2,
**characterized in that**
the vertical profiles (4) have as fastening inserts (8) threaded blocks (9) and can be fixed in each case with the aid of a fastening screw, which is guided through the corner part (6).

4. Basic rack according to claim 3,
**characterized in that**
the threaded blocks (9) are fastened in the vertical profiles (4) by pressing, stamping or screwing and in each case have a thread channel for the fastening screw.

5. Basic rack according to one of the preceding claims,
**characterized in that**
the corner parts (6) of the corner connectors (5) have a triangular contact surface (11) for the frontal contact of the vertical profile (4) with the fastening insert (8).

6. Basic rack according to claim 5,
**characterized in that**
the corner parts (6) of the corner connectors (5) are constructed in complementary manner to the shaped, triangular fixing extensions (7) and have a hole (12) for receiving and guiding the fastening screw.

7. Basic rack according to one of the preceding claims,
**characterized in that**
the transverse profiles (2), depth profiles (3) and vertical profiles (4) are cross-sectionally constructed as a right-angled triangle and are arranged in such a way that the lateral faces (13, 14) enclosing the right angle are directed towards an inner area (10) formed by the basic rack.

8. Basic rack according to one of the preceding claims,
**characterized in that**
the transverse profiles (2) and depth profiles (3) formed from the triangular hollow profile are provided with a fastening web (15).

9. Basic rack according to claim 8,
**characterized in that**
the fastening web (15) is positioned on the inside and in vertically oriented manner on the triangular hollow profile of the transverse profiles (2) and depth profiles (3) and is provided with a perforated grid (16).

10. Basic rack according to one of the preceding claims,
**characterized in that**
the triangular hollow profile of the transverse profiles (2) and depth profiles (3) is provided with a retaining web (17).

11. Basic rack according to claim 10,
**characterized in that**
the retaining web (17) is positioned on the outside and vertically and runs parallel to the fastening web (15).

12. Basic rack according to one of the preceding claims,
**characterized in that**
the transverse profiles (2) and depth profiles (3) mounted on the fixing extensions (7) are detachably or undetachably fastened to the corner connectors (5).

13. Basic rack according to claim 12,
**characterized in that**
the transverse profiles (2) and depth profiles (3) can be fixed by stamping or crimping on the fixing extensions (7) of the corner connectors (5).

14. Basic rack according to claim 12,
**characterized in that**
the fixing extensions (7) have engagement elements (18) and the transverse profiles (2) and depth profiles (3) recesses (28) for receiving the engagement elements (18) in the fastening position.

15. Basic rack according to claim 12,
**characterized in that**
the fixing extensions (7) are provided with at least one hole (19) and the mounted transverse profiles (2) and depth profiles (3) can be fixed with the aid of an impact pin (20) which can be driven into the hole (12).

16. Basic rack according to claim 12,
**characterized in that**
the fixing extensions (7) are provided with a hole (19) and the transverse profiles (2) and depth profiles (3) with a through hole (21) aligned in the mounted fastening position and that the through hole (21) has a smaller diameter than the hole (19) and the projecting material can be pressed in in the area of the through hole (21).

17. Basic rack according to claim 12,
**characterized in that**
the transverse profiles (2) and depth profiles (3) can be fixed by adhesion to the fixing extensions (7) and grooves (22) for receiving the adhesive are formed on the fixing extensions (7).

18. Basic rack according to one of the preceding claims,
**characterized in that**
the corner connectors (5) are manufactured as aluminium castings and the transverse profiles (2), depth profiles (3) and vertical profiles (4) constructed as triangular hollow profiles are manufactured from extruded aluminium or rolled steel sections.

## Revendications

1. Bâti, en particulier pour des armoires de rangement d'équipement, avec des profilés transversaux (2) et des profilés de profondeur (3) qui sont assemblés pour former un cadre supérieur et un cadre inférieur par l'intermédiaire d'assemblages d'angle (5), et avec des profilés verticaux (4) qui relient les cadres supérieur et inférieur dans la région des assemblages d'angle (5),
**caractérisé en ce qu'**
au moins les profilés transversaux (2) et les profilés de profondeur (3) du cadre supérieur et du cadre inférieur sont formés à partir d'un profilé creux triangulaire, chaque assemblage d'angle (5) comprend une pièce d'angle (6) avec deux embouts d'emboîtement (7) pour emboîter un profilé transversal triangulaire (2) et un profilé de profondeur (3), et les profilés verticaux (4) sont pourvus, du côté des extrémités, d'inserts de fixation (8) pour la fixation aux pièces d'angle (6) des assemblages d'angle (5).

2. Bâti selon la revendication 1,
**caractérisé en ce que**
les profilés verticaux (4) sont formés à partir du même profilé creux triangulaire que les profilés transversaux (2) et les profilés de profondeur (3) des cadres supérieur et inférieur.

3. Bâti selon la revendication 1 ou 2,
**caractérisé en ce que**
les profilés verticaux (4) présentent comme inserts de fixation (8) des blocs filetés (9) et peuvent être fixés chacun à l'aide d'une vis de fixation, qui passe à travers la pièce d'angle (6).

4. Bâti selon la revendication 3,
**caractérisé en ce que**
les blocs filetés (9) sont fixés dans les profilés verticaux (4) par pressage, estampage ou vissage et présentent chacun un canal fileté pour la vis de fixation.

5. Bâti selon l'une quelconque des revendications précédentes,
**caractérisé en ce que**
les pièces d'angle (6) des assemblages d'angle (5) présentent une face d'appui triangulaire (11) pour l'appui d'extrémité du profilé vertical (4) avec un insert de fixation (8).

6. Bâti selon la revendication 5,
**caractérisé en ce que**
les pièces d'angle (6) des assemblages d'angle (5) sont complémentaires aux embouts d'emboîtement triangulaires préformés (7) et présentent un perçage (12) destiné à recevoir et guider la vis de fixation.

7. Bâti selon l'une quelconque des revendications précédentes,
**caractérisé en ce que**
les profilés transversaux (2), les profilés de profondeur (3) et les profilés verticaux (4) ont une section en forme de triangle rectangle et sont disposés de telle façon que les faces latérales (13, 14) formant les côtés de l'angle droit soient tournées vers un espace intérieur (10) formé par le bâti.

8. Bâti selon l'une quelconque des revendications précédentes,
**caractérisé en ce que**
les profilés transversaux (2) et les profilés de profondeur (3) sont pourvus d'une aile de fixation (15).

9. Bâti selon la revendication 8,
**caractérisé en ce que**
l'aile de fixation (15) est disposée du côté intérieur et est orientée verticalement sur le profilé creux triangulaire des profilés transversaux (2) et des profilés de profondeur (3) et est pourvue d'une grille de trous (16).

10. Bâti selon l'une quelconque des revendications précédentes,
**caractérisé en ce que**
le profilé creux triangulaire des profilés transversaux (2) et des profilés de profondeur (3) est pourvu d'une aile de retenue (17).

11. Bâti selon la revendication 10,
**caractérisé en ce que**
l'aile de retenue (17) est disposée du côté extérieur perpendiculairement, et parallèle à l'aile de fixation (15).

12. Bâti selon l'une quelconque des revendications précédentes,
**caractérisé en ce que**
les profilés transversaux (2) et les profilés de profondeur (3) emboîtés sur les embouts d'emboîtement (7) sont fixés de façon démontable ou indémontable aux assemblages d'angle (5).

13. Bâti selon la revendication 12,
**caractérisé en ce que**
les profilés transversaux (2) et les profilés de profondeur (3) peuvent être fixés aux embouts d'emboîtement (7) des assemblages d'angle (5) par estampage ou sertissage.

14. Bâti selon la revendication 12,
**caractérisé en ce que**
les embouts d'emboîtement (7) présentent des éléments d'accrochage (18) et les profilés transversaux (2) et les profilés de profondeur (3) présentent des creux (28) destinés à recevoir les éléments d'accrochage (18) en position de fixation.

15. Bâti selon la revendication 12,
**caractérisé en ce que**
les embouts d'emboîtement (7) sont pourvus d'au moins un perçage (19) et les profilés transversaux (2) et les profilés de profondeur (3) emboîtés peuvent être fixés à l'aide de tenons (20) à enfoncer dans le perçage (12).

16. Bâti selon la revendication 12,
**caractérisé en ce que**
les embouts d'emboîtement (7) sont pourvus d'un perçage (19) et les profilés transversaux (2) et les profilés de profondeur (3) sont pourvus d'un perçage traversant (21) aligné en position de fixation emboîtée, le perçage traversant (21) présente un diamètre plus petit que le perçage (19) et la matière qui dépasse dans la région du perçage traversant (21) peut être refoulée.

17. Bâti selon la revendication 12,
**caractérisé en ce que**
les profilés transversaux (2) et les profilés de profondeur (3) peuvent être fixés aux embouts d'emboîtement (7) par collage et des stries (22) destinées à recevoir une colle sont formées sur les embouts d'emboîtement (7).

18. Bâti selon l'une quelconque des revendications précédentes,
**caractérisé en ce que**
les assemblages d'angle (5) sont des pièces coulées en aluminium et les profilés transversaux (2), les profilés de profondeur (3) et les profilés verticaux (4) formés par des profilés creux triangulaires sont produits à partir de profilés extrudés en aluminium ou de profilés roulés en acier.
